(19) Europäisches Patentamt
European Patent Office
Office européen des brevets

(11) **EP 1 627 462 B1**

(12) **FASCICULE DE BREVET EUROPEEN**

(45) Date de publication et mention de la délivrance du brevet:
**31.08.2011 Bulletin 2011/35**

(51) Int Cl.:
***H02P 6/00*** *(2006.01)*

(21) Numéro de dépôt: **04742647.3**

(22) Date de dépôt: **06.05.2004**

(86) Numéro de dépôt international:
**PCT/FR2004/001085**

(87) Numéro de publication internationale:
**WO 2004/100351 (18.11.2004 Gazette 2004/47)**

(54) **PROCEDE DE COMMANDE D'UNE MACHINE ELECTRIQUE TOURNANTE POLYPHASEE ET REVERSIBLE POUR VEHICULE AUTOMOBILE A MOTEUR THERMIQUE**

VERFAHREN ZUR STEUERUNG EINER REVERSIBLEN ROTIERENDEN ELEKTRISCHEN MEHRPHASENMASCHINE FÜR EIN KRAFTFAHRZEUG MIT VERBRENNUNGSMOTOR

METHOD OF CONTROLLING A POLYPHASE, REVERSIBLE ROTATING ELECTRICAL MACHINE FOR COMBUSTION ENGINE MOTOR VEHICLES

(84) Etats contractants désignés:
**AT BE BG CH CY CZ DE DK EE ES FI FR GB GR HU IE IT LI LU MC NL PL PT RO SE SI SK TR**

(30) Priorité: **07.05.2003 FR 0305592**

(43) Date de publication de la demande:
**22.02.2006 Bulletin 2006/08**

(73) Titulaire: **VALEO EQUIPEMENTS ELECTRIQUES MOTEUR**
**94017 Créteil (FR)**

(72) Inventeurs:
• **TASPINAR, Ertugrul**
  **F-01400 Chatillon-Sur-Chalaronne (FR)**
• **DUBUS, Jean-Marc**
  **F-91000 Evry (FR)**
• **DOFFIN, Hugues**
  **F-94000 Créteil (FR)**

(56) Documents cités:
WO-A1-02/060711    WO-A1-02/060711
US-A- 5 182 500    US-A- 5 838 123
US-A1- 2003 038 482

**EP 1 627 462 B1**

## Description

## Domaine de l'invention

La présente invention est relative à une machine électrique tournante réversible telle qu'un alternateur-démarreur de véhicule, notamment automobile.

Une telle machine est décrite par exemple dans les documents EP-A-0 260 176 (US-A- 4 803 376), FR-A-2 745 444 et FR-A-2 745 445 (US-A-6 002 219) auxquels on pourra se reporter pour plus de précisions.

Cette machine du type polyphasé et réversible fonctionne donc en alternateur, c'est-à-dire en générateur électrique, pour notamment charger la batterie du véhicule et comme démarreur, c'est-à-dire en moteur électrique, pour notamment entraîner le moteur à combustion interne, dit aussi moteur thermique, du véhicule automobile pour son démarrage.

A cet effet le pont redresseur en sortie de l'induit de l'alternateur sert également de pont de commande des phases du stator de l'alternateur.

## Etat de la technique

De manière connue cette machine tournante est dans un mode de réalisation associée au volant moteur du véhicule automobile en étant par exemple intégrée à celui-ci et tourne donc à la même vitesse de rotation que le vilebrequin du moteur thermique du véhicule automobile entraînant en rotation le volant moteur éventuellement en deux parties pour formation d'un volant amortisseur doté d'organes élastiques intervenant entre les deux parties ou d'un volant flexible. Dans ces deux cas le rotor de la machine est porté par l'une de ces parties.

En variante la machine réversible est entraînée en rotation par le vilebrequin par l'intermédiaire d'un dispositif de transmission de mouvement tel qu'un dispositif à poulies et courroie. Dans ce cas la machine tourne à une vitesse supérieure à celle du vilebrequin.

Dans tous les cas la machine électrique tournante comprend :

- un rotor bobiné, c'est-à-dire doté d'au moins un bobinage d'excitation, constituant, lorsque la machine fonctionne en alternateur, l'inducteur associé classiquement à deux bagues collectrices et deux balais par lesquels est amené le courant d'excitation ;
- un stator polyphasé portant plusieurs bobines ou enroulements à raison d'au moins un enroulement par phase, constituant, lorsque la machine fonctionne en alternateur, l'induit et qui sont connectés en étoile ou en triangle dans le cas le plus fréquent d'une structure triphasée et qui délivrent vers le pont redresseur, en fonctionnement alternateur, la puissance électrique convertie.

Le pont est relié aux différentes phases de l'induit et est monté entre la masse et une borne d'alimentation de la batterie. Ce pont présente par exemple plusieurs bras avec des diodes associées à des transistors de type MOSFET ou plus généralement à des interrupteurs.

Le fonctionnement en mode moteur électrique d'une telle machine s'effectue en imposant par exemple un courant continu dans l'inducteur et en délivrant de manière synchrone sur les phases du stator des signaux déphasés de 120°, idéalement sinusoïdaux mais éventuellement trapézoïdaux ou carrés.

Ce pont redresseur et de commande est piloté par un module électronique de commande et de contrôle. Le pont et le module de commande appartiennent à une unité, dite unité de commande et de contrôle, implantée le plus souvent à l'extérieur de la machine. Le pont, associé aux enroulements des phases du stator, appartient à un étage de puissance et le module à un étage de plus faible puissance

Cette unité est associée à la machine et son module électronique comporte un calculateur tel qu'un microcontrôleur.

Il est en outre prévu des moyens pour le suivi de la position angulaire du rotor pour, en mode moteur électrique, injecter au bon moment du courant électrique dans la phase appropriée et donc dans le bobinage ou enroulement concerné du stator.

Ces moyens avantageusement du type magnétique, en variante du type optique, envoient des informations au module électronique de commande et de contrôle et sont décrits par exemple dans les documents WO 01/69762 (US-A- 2002/0158523) déposé le 09 mars 2001.

Ces moyens comportent donc une cible calée en rotation sur le rotor ou la poulie de la machine et au moins un capteur du type à effet Hall ou magnéto-résistif détectant le passage de la cible avantageusement du type magnétique.

De préférence au moins trois capteurs sont prévus, ceux-ci étant portés par le palier avant ou arrière que comporte la machine électrique tournante pour supporter de manière fixe le stator et à rotation le rotor.

Dans le document EP -A- 0 715 979 on a prévu de faire travailler la machine comme moteur auxiliaire pour, lorsque le véhicule est en stationnement, mettre en marche le dispositif de climatisation du véhicule automobile et entraîner le compresseur de ce dispositif.

Dans le document WO 01/45250 on a également prévu de faire travailler la machine comme moteur auxiliaire notamment lorsque lors d'un arrêt du moteur thermique du véhicule au feu rouge.

Dans tous les cas il est prévu une unité de commande et de contrôle comportant un commutateur permettant, d'une part, de raccorder le rotor bobiné de la machine à un dispositif régulateur de tension contrôlant l'intensité circulant dans l'inducteur lorsque la machine fonctionne en générateur électrique -mode alternateur-et, d'autre part, de raccorder le stator de la machine à un dispositif de commande, tel qu'un onduleur, commandant de manière séquentielle les phases de l'induit avec intervention de capteurs de la position angulaire du rotor lorsque la machine fonctionne en moteur électrique notamment en mode démarreur.

Dans le document US-A-5182500, il est décrit une solution conçue pour fournir une commande de moteur équilibrée avec des amplitudes de signaux de phase respectifs qui deviennent identiques. Il est décrit une boucle de contre-réaction qui est prévue pour modifier les amplitudes des signaux. Le fonctionnement de cette boucle de régulation repose sur des égalités $Hc \times Ha - Hb^2$ - constante ou $Hc \times Ha + Hb^2 = constante$ et il est fait appel à des coefficients qui prennent des valeurs constantes +1 ou -1.

Dans le document WO 02/060711 (US-A-2003/0038482) il est décrit un procédé de commande de la machine, dans lequel, lors du fonctionnement en moteur électrique ladite machine fonctionne selon deux modes correspondant à des courbes de caractéristiques vitesse/couple différentes, à savoir un premier mode, dit mode démarreur, permettant d'entraîner le moteur thermique du véhicule pour démarrer celui-ci avec des couples élevés pour des vitesses basses, tandis que le second mode, dit mode moteur auxiliaire, permet d'entraîner la machine seule ou au moins un consommateur de puissance, tel que le compresseur d'un dispositif de climatisation ou une pompe d'assistance pour direction hydraulique assistée, et/ou le moteur thermique avec des vitesses plus élevées et des couples plus faibles que ceux du mode démarreur, ladite machine électrique étant dotée d'un stator présentant des phases, d'un rotor et de moyens pour le suivi de la rotation du rotor; lesdits moyens comportant des capteurs adaptés à envoyer des signaux au module électronique précité de l'unité de commande et de contrôle des phases du stator. Les informations sous la forme de signaux envoyés par les capteurs au module électronique de la dite unité sont utilisés, d'une part, dans un premier ordre, dit ordre direct, tant que la machine électrique fonctionne en mode démarreur et, d'autre part, dans un ordre modifié par rapport à l'ordre direct lorsque la machine électrique fonctionne en mode moteur auxiliaire.

En mode moteur auxiliaire, par rapport audit ordre direct; on effectue au moins une permutation et une inversion des signaux envoyés par les capteurs à ladite unité.

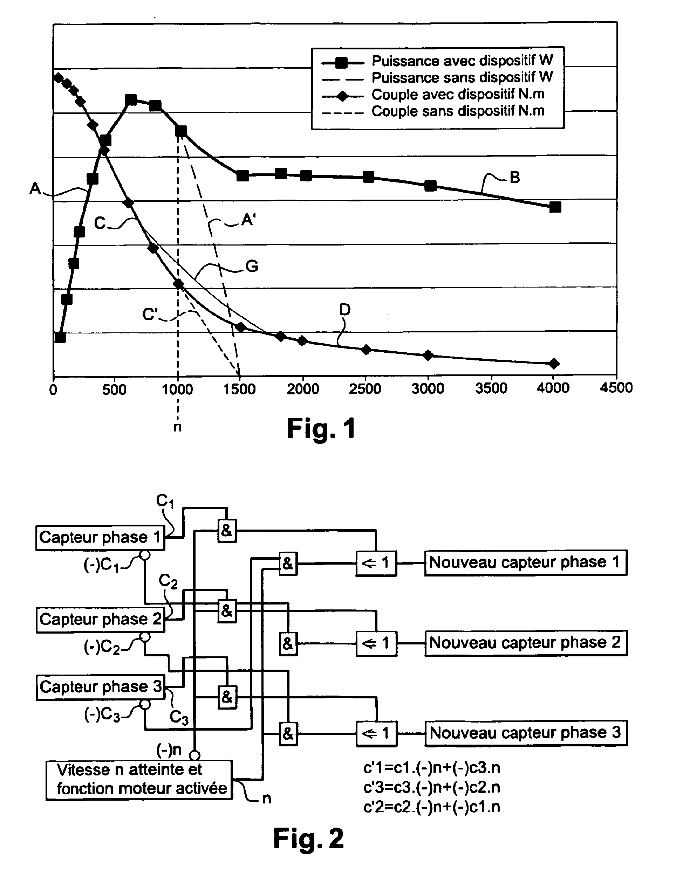

Le mode moteur auxiliaire est activé lorsque en mode démarreur la vitesse de rotation de la machine électrique atteint un seuil, dit vitesse d'activation, avant que la puissance de ladite machine s'annule comme visible en n à la figure 1.

La permutation et l'inversion des signaux envoyés par les capteurs à ladite unité sont réalisées en sorte de créer un déphasage d'au moins un pas de - 60° électrique par rapport audit ordre direct.

L'inversion et la permutation des signaux envoyés par les capteurs à ladite unité sont réalisées par l'intermédiaire d'éléments discrets, tels que des portes logiques du type ET associées à chaque capteurs comme visible à la figure 2, dans laquelle C'1, C'2 et C'3 sont les signaux actifs délivrés par les nouveaux capteurs suite à l'inversion et la permutation des signaux pour la vitesse n.

Grâce à ces dispositions la machine électrique tournante et réversible est utilisée en moteur électrique auxiliaire dans une plage de vitesse supérieure à celle nécessaire à démarrer le moteur thermique. Ainsi on peut arrêter le moteur thermique du véhicule automobile au feu rouge et entraîner au moins un accessoire ou une charge électrique par la machine électrique tel que le compresseur du dispositif de climatisation. Ensuite on peut redémarrer le moteur thermique. En variante l'accessoire est une pompe d'assistance pour direction hydraulique assistée en sorte que l'on peut tourner les roues lorsque le moteur thermique est arrêté au feu rouge. Bien entendu on peut en mode moteur auxiliaire entraîner plusieurs charges électriques ou en variante entraîner la machine seule avant de passer en mode alternateur.

## Objet de l'invention

Dans ce document WO 02/060711 les signaux délivrés par les capteurs sont du type tout ou rien en sorte que l'on augmente le couple délivré par la machine en fonctionnement mode moteur électrique à une vitesse déterminée.

Avec ce type de signal il est difficile d'ajuster les signaux des capteurs pour avoir lorsque la machine fonctionne en moteur électrique (mode démarreur et mode auxiliaire) un couple optimal en fonction de la vitesse de rotation de la machine car on ne connaît pas de manière précise la position instantanée du rotor de la machine.

D'une manière générale il est souhaitable d'augmenter le couple délivré par la machine en fonctionnement mode moteur électrique.

La présente invention a pour objet de pallier cet inconvénient et de répondre à ce souhait de manière simple et économique.

Cet objet est obtenu par un procédé de commande d'une machine électrique tournante polyphasé et réversible suivant la revendication 1.

Avantageusement, pour chaque signal déphasé la somme des coefficients est nulle.

Grâce à l'invention on obtient la précision requise dans l'environnement perturbé de la machine électrique tout en augmentant le couple délivré par la machine et/ou le rendement de celle-ci lorsque la machine fonctionne en mode moteur électrique.

Il est ainsi possible d'augmenter les performances de la machine pour faire mieux décoller le véhicule au démarrage ou pour éviter que le moteur du véhicule cale, la machine intervenant alors pour jouer une fonction de " boost" et ce pour des vitesses de rotation plus basses du moteur thermique du véhicule automobile.

D'une manière générale, par rapport à l'art antérieur, lorsque la machine fonctionne en mode moteur électrique

- on limite le courant dans l'onduleur tout en ayant des décalages plus faibles des signaux des capteurs ;
- on augmente le couple de la machine pour des vitesses de rotation de celle-ci inférieures à celles de l'art antérieur ;
- on peut réaliser des décalages continûment variables sur toute la plage de vitesse de rotation de la machine pour obtenir un couple optimal délivré par la machine en mode moteur électrique sur toute cette plage.

Avantageusement les moyens de suivi de la rotation du rotor sont du type magnétique.

Les capteurs sont dans un mode de réalisation des capteurs à effet Hall du type linéaire ou des capteurs linéaires du type magnétorésistif.

**Description sommaire des dessins**

D'autres caractéristiques et avantages de l'invention ressortiront encore de la description qui suit, laquelle est purement illustrative et non limitative et doit être lue en regard des dessins annexés sur lesquels :

- la figure 1 montre, selon le document WO 02/060711,
  les courbes caractéristiques (couple et puissance en fonction d'une vitesse de rotation plus précisément le nombre de tours par minute) -à savoir celle du rotor de la machine-proportionnelle à celle du moteur thermique du véhicule ;
- la figure 2 illustre un circuit d'alimentation conforme à un mode de mise en oeuvre possible selon le document WO 02/060711.
- la figure 3 est une vue en coupe axiale, sans coupe axiale du rotor de la cible et du porte-cible, d'un alternateur -démarreur selon le document WO 02/060711;
- la figure 4 représente la courbe caractéristique (tension, temps), après lecture de la cible magnétique, d'un signal du capteur du type linéaire utilisé pour réaliser l'invention ;
- la figure 5 est un schéma illustrant l'invention ;
- la figure 6 est un schéma d'un premier mode de réalisation selon l'invention avec un déphasage des signaux continûment variable en fonction de la vitesse de rotation de la machine ;
- la figure 7 est une vue partielle analogue à la figure 6 pour un second mode de réalisation ;

la figure 8 est une vue schématique de la machine électrique tournante selon l'invention.

**Description d'exemples de réalisation de l'invention**

Dans les figures la machine électrique tournante réversible du type polyphasé est un alternateur-démarreur du type sus-indiqué est décrit par exemple dans le document WO 01/69762(US-A- 2002/0158523) précité.

Cette machine a ici la structure d'un alternateur classique par exemple du type de celui décrit dans le document EP-A-0 515 259 (US-A- 5 270 605) auquel on se reportera pour plus de précisions.

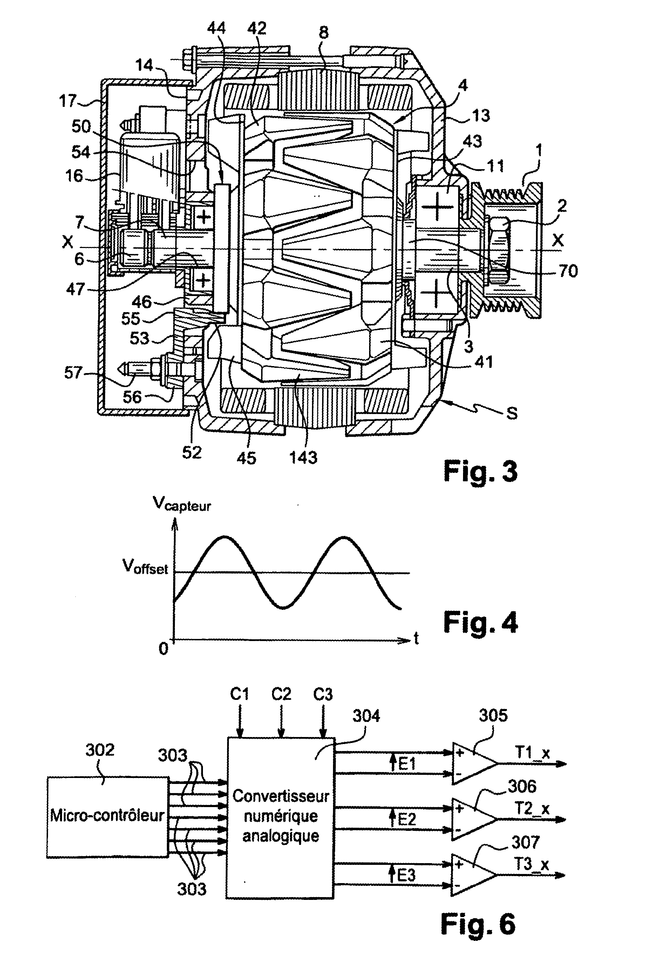

Cette machine (figure 3) est donc à ventilation interne (refroidissement par air), son rotor à griffes 4 portant au moins à l'une de ses extrémités axiales un ventilateur 43, 44 à pales 45. En variante la machine est refroidie par eau.

Dans cette figure 3 le rotor 4 à griffes comporte des roues polaires 41,42 portants à leur périphérie externe des dents 143 d'orientation axiale et de forme globalement trapézoïdale. Les dents 143 d'une roue polaire sont dirigées vers les dents de l'autre roue polaire. Ces dents sont réparties de manière imbriquée d'une roue polaire à l'autre.

Bien entendu, comme décrit par exemple dans le document FR-A-2 793 085 (US-A- 6 486 585), des aimants permanents peuvent être intercalés entre les dents des roues polaires pour augmenter le champ magnétique. Ces dents sont issues de la périphérie externe d'un flasque transversal que comporte chaque roue polaire 41,42.

Le rotor 4 porte centralement un bobinage d'excitation entre les flasques de ses roues polaires. Ce bobinage est visible par exemple à la figure 3 du document WO 01/69762 et est porté par des noyaux issus des flasques des roues 41,42 ou par un noyau constituant une entretoise entre lesdits flasques.

Le bobinage d'excitation comporte un élément électriquement conducteur qui est enroulé avec formation de spires. Ce bobinage d'excitation, lorsqu'il est activé, magnétise le rotor 4 pour créer à l'aide des dents 143 des paires de pôles magnétiques Nord-Sud. Les extrémités du bobinage du rotor sont reliées chacune à une bague collectrice 6,7 sur chacune desquelles frotte un balai (non référencé). Les balais sont portés par un porte-balais 16 solidaire du palier arrière 14 de la machine portant centralement un roulement à billes (non référencé) supportant à rotation l'extrémité arrière de l'arbre 3 portant à solidarisation, ici grâce à un moletage, le rotor 4.

L'extrémité avant de l'arbre 3 est supportée à rotation par un roulement à billes 11 porté par le palier avant 13 de la machine. L'extrémité avant de l'arbre porte à l'extérieur de la machine un organe de transmission de mouvement sous la forme d'une poulie 1 appartenant à un dispositif de transmission de mouvement comportant au moins une courroie en prise avec la poulie. Le dispositif de transmission de mouvement établit une liaison entre la poulie et un organe, tels qu'une autre poulie, entraîné en rotation par le moteur à combustion interne du véhicule. L'arbre 3 est fileté à son extrémité avant pour fixation de la poulie 1 intérieurement creuse à l'aide d'un écrou 2 comme visible dans cette figure 1. L'axe de symétrie axiale X-X définit l'axe de rotation de la machine électrique tournante ici du type triphasé.

Lorsque la machine - ici un alternateur-démarreur - fonctionne en mode alternateur c'est-à-dire comme générateur électrique, la poulie est entraînée en rotation par le moteur à combustion interne du véhicule via au moins la courroie précitée. Lorsque la machine fonctionne en mode démarreur, c'est-à-dire en moteur électrique, la poulie entraîne en rotation le moteur du véhicule via la courroie.

En variante le dispositif de transmission de mouvement comporte au moins une chaîne, ou au moins un engrenage, ou au moins un pignon en sorte que la poulie 1 peut être remplacée par une roue dentée, un engrenage, un pignon ou autre organe constituant l'organe de transmission de mouvement.

Les paliers avant et arrière 13,14, de manière connue, sont ajourés pour la ventilation interne de la machine, sont reliés entre eux, par exemple à l'aide de tirants comme visible à la figure 1, et appartiennent au support S de la machine destiné à être fixé sur une partie fixe du véhicule.

Les paliers présentent ainsi des entrées et des sorties d'air.

En variante, de manière connue, les supports sont en contact étanche l'un avec l'autre et sont creusés intérieurement à leur périphérie externe d'orientation axiale pour formation d'un canal de circulation d'un fluide de refroidissement, tel que le fluide de refroidissement du moteur thermique du véhicule, en sorte que la machine est refroidie ; ce type de refroidissement étant appelé classiquement refroidissement par eau.

Le support S grâce aux paliers 13,14 porte intérieurement de manière fixe à sa périphérie externe le stator 8 de la machine comportant un corps, constitué usuellement par un paquet de tôles, portant des bobines ou plus généralement des enroulements dont les sorties sont reliées au pont redresseur et de commande précité.

Les bobines ou enroulements du stator sont formés par des fils électriquement conducteurs, par exemple conformés pour présenter des enroulements en étoile et en triangle comme décrit par exemple dans le document FR A 2 737 063, ou des enroulements en barres électriquement conducteurs comme décrit par exemple dans les documents WO 92/06527 et WO 02/50976 déposé le 21/12/2001 ; les barres peuvent être de section rectangulaire. Les fils ou les barres traversent à isolation électrique le corps du stator 8 et sont reliés entre eux pour former des réseaux s'étendant de part et d'autre du corps du stator 8 en formant un premier et un deuxième chignons.

Plus précisément, de manière connue, la machine comporte plusieurs phases comprenant chacune une entrée et une sortie et les fils ou les barres sont reliés entre eux pour former lesdits réseaux et connecter l'entrée de la phase à la sortie de la phase en formant au moins un enroulement par phase. La machine peut donc être du type triphasée ou hexaphasé comme dans les figures 2 à 6 de ce document WO 02/50976 (US-A-2003/0011268) des encoches formées dans chaque tôle du corps du stator. En variante les fils ou les barres traversent centralement à isolation électrique le corps du stator en étant fixés au corps du stator par de la résine comme décrit par exemple dans le document US A 5 097 167.

Le stator 8, constituant en mode alternateur l'induit de la machine, entoure le rotor 4, constituant en mode alternateur l'inducteur de la machine. Les balais, via le porte-balais 16, sont reliés à un dispositif régulateur de tension de l'alternateur pour maintenir la tension de l'alternateur à une tension voulue ici de l'ordre de 14V, pour une batterie de 12V.

Le pont redresseur et de commande, le module électronique de commande et de contrôle du pont redresseur à bras appartiennent à une unité de commande et de contrôle et sont ici montés dans un boîtier électronique implanté à l'extérieur de la machine. Il en est de même dans une forme de réalisation du dispositif régulateur de tension.

En variante le boîtier est monté sur la machine par exemple à l'arrière, comme décrit par exemple dans le document FR 01 16088 déposé le 12/12/2001 et publié sous le numéro FR A 2 835 978, ou à la périphérie externe de celle-ci.

Le dispositif régulateur de tension est dans une variante monté à l'extérieur du boîtier en étant relié électriquement à celui-ci. Toutes les combinaisons sont possibles.

Ce boîtier porte des moyens de commutation comportant ici des interrupteurs de puissance, une unité électronique de commande et de contrôle et un circuit de surexcitation.

Le module électronique comporte un calculateur, tel qu'un microcontrôleur, recevant des informations de capteurs 52 décrits ci-après.

La machine formant alternateur-démarreur présente ici des bobinages ou enroulements de stator et un pont redresseur montés en parallèle avec une batterie B d'un véhicule et un bobinage d'excitation porté à solidarisation par le rotor et alimenté par l'intermédiaire d'un circuit de surexcitation.

Ce circuit de surexcitation est actif en mode démarrage (alternateur-démarreur fonctionnant en moteur électrique) pour, rendre maximal le couple de démarrage de l'alternateur-démarreur et démarrer plus aisément le moteur à combustion interne, dit aussi moteur thermique, du véhicule automobile, soit lors d'un démarrage à froid, soit lors d'un redémarrage après par exemple un arrêt à un feu rouge ; le moteur ayant été coupé pour réduire à la consommation de carburant et réaliser ainsi une fonction dite de «Stop and GO».

Ce circuit de surexcitation reçoit en entrée la tension de réseau de bord délivrée par la batterie et/ou l'alternateur et délivre aux bornes du bobinage d'excitation une tension supérieure à cette tension de réseau de bord.

Le montage comporte de manière précitée en outre des moyens de commutation (interrupteur de puissance par exemple) commandés par le module électronique de commande et de contrôle.

Ce module de commande et de contrôle est associée au dispositif régulateur de tension de l'alternateur et commande par exemple le commutateur par un signal à modulation de largeur d'impulsion.

Egalement, l'unité de commande et de contrôle, à laquelle appartient le module, peut comporter des moyens qui permettent, dans le cas où l'alternateur-démarreur se déchargerait sur le réseau de bord en étant déconnecté par rapport à la batterie (cas de « load dump » selon la terminologie anglo-saxonne généralement utilisée par l'homme du métier), de commander immédiatement l'ouverture du commutateur de puissance afin de réaliser une démagnétisation rapide de l'alternateur, notamment de son rotor.

Le circuit de surexcitation agit également lorsque la machine fonctionne en mode alternateur.

En variante on peut mettre en forme le bobinage d'excitation du rotor 4 à l'aide d'un outil de conformage pour donner à celui-ci à sa périphérie externe une forme pointue ou une forme de tonneau afin que le bobinage vienne au plus près des dents axiales du rotor à griffes comme décrit par exemple dans le document WO 01/93406 déposé le 29 mai 2001. Ceci est favorable pour la surexcitation.

Bien entendu l'alternateur-démarreur peut être implanté au niveau de l'embrayage du véhicule automobile comme décrit par exemple dans le document FR-A-2 782 356 déposé le 28 juillet 1999.

Ainsi le rotor de l'alternateur-démarreur peut être implanté entre le moteur à combustion interne du véhicule automobile et le plateau de réaction de l'embrayage à friction.

En variante le rotor peut être implanté en aval de l'embrayage à friction.

Dans ces deux cas le rotor est entraîné en rotation par le volant moteur du véhicule automobile lié en rotation an vilebrequin du moteur thermique du véhicule automobile.

Le rotor peut être porté par le volant moteur, qui entraîne en rotation de l'embrayage à friction, le plateau de réaction constituant alors l'extrémité arrière du volant moteur.

De manière précitée ce volant peut être en deux parties en sorte que le rotor est dans ce cas porté par la partie primaire, solidaire en rotation du vilebrequin, ou la partie secondaire solidaire du plateau de réaction de l'embrayage destiné à coopérer avec une face de friction du disque de friction de l'embrayage. Des organes élastiques, ainsi qu'éventuellement un limiteur de couple, interviennent entre ces deux parties pour une bonne filtration des vibrations et formation d'un double volant amortisseur. En variante ces deux parties sont solidaires, l'une pouvant être souple axialement pour formation d'un volant flexible.

L'alternateur-démarreur peut être sans balai. En variante l'alternateur-démarreur comporte un rotor à pôles saillants avec des bobinages d'excitation associés à chaque pôle. En variante , comme décrit dans le document WO 02/054566, le rotor comporte une alternance de bobinages d'excitation et d'aimants permanents intégrés dans le rotor, les bobinages d'excitation étant enroulés autour de pôles saillants, découpés dans le paquet de tôles que comporte le rotor, tandis que les aimants permanents sont reçus dans des logements réalisés dans le paquet de tôles du rotor et fermés à chacune de leurs extrémités axiale par une pièce de maintien, dotée d'une partie amagnétique destinée à venir en butée avec les aimants.

Il est en outre prévu des moyens pour le suivi de la position angulaire du rotor pour, en mode moteur électrique, injecter au bon moment du courant électrique dans la phase appropriée et donc dans le bobinage concerné du stator.

Ces moyens, avantageusement du type magnétique, envoient des informations au module électronique de commande et de contrôle, c'est-à-dire à l'unité de commande et de contrôle, et sont décrits par exemple dans le document WO 01/69762 déposé le 09 mars 2001.

Ainsi à la figure 3 une cible 50 est fixée sur un porte-cible calé en rotation sur le rotor 4. Ce porte-cible est implanté axialement entre le rotor 4 et le palier arrière 14 radialement en dessous des pales 45 du ventilateur 44. Ce porte-cible forme une entretoise entre le rotor 4 et la bague interne du roulement à billes du palier arrière 14 et entoure en partie la bague externe de ce roulement à billes comme visible dans les figures de ce document WO 01/69762. Sur le fond transversal du palier arrière est fixé un porte-capteurs 53 qui porte ici trois capteurs 52, qui suivant une caractéristique de l'invention sont du type linéaire.

Les capteurs sont déphasés de 120° électrique (2n/3) entre eux.

La cible 50 est ici de forme annulaire continue. Cette cible 50 est magnétique et porte de manière alternée des pôles Nord et Sud. La lecture par les capteurs 52 à seuil est du type radial. Pour ce faire le porte-capteurs 53, par exemple en matière plastique, présente des portions 55 d'orientation axiale 55 traversant ici un trou 54 de grande taille du palier 14. Chaque portion 55 porte un capteur 52 implanté radialement au-dessus de la cible 50 d'orientation axiale portée par la périphérie externe du porte-cible. Le porte-capteurs 53 présente des oreilles 56 avec des trous de forme oblongue traversés chacun par un boulon de fixation 57 au fond du palier 14. Les portions 55 sont implantées radialement en dessous des pales 45. Le porte-capteurs 53 a ainsi une position réglable circonférentiellement par rapport au palier 14. Un capot de protection 17 ajouré coiffe la partie arrière de la machine et notamment le porte-balais 16 et le porte-capteurs 53. Ce capot 17 et fixé sur le flasque arrière 14 constituant avec le palier avant 13 le support fixe S du stator 8 de la machine du type synchrone.

En variante la lecture est axiale les capteurs étant implantés axialement en face de la cible à la faveur du trou 54. En variante le porte-cible est implanté entre le fond du palier avant 13 et le rotor à la place de l'entretoise 70 en appui sur la bague interne du roulement à billes 11. Le porte-capteurs 53 est alors fixé de manière réglable angulairement sur le palier avant 13.

En variante la cible est fixée sur la poulie 1 en vis à vis du porte-capteurs porté de manière réglable angulairement par le palier avant 13 comme décrit dans le document FR 2 807 231; la lecture étant du type axial ou radial.

En variante le porte cible est d'un seul tenant avec le ventilateur concerné solidaire du rotor comme à la figure 12 du document WO 02/060711.

En variante les capteurs sont montés sur une pièce porteuse portant à sa périphérie externe le stator de la machine et permettant de définir un entrefer précis avec le rotor. Le volant moteur porte le rotor de la machine ainsi que le plateau de réaction de l'embrayage. Des moyens de palier, tels que au moins un roulement à billes interviennent entre le volant moteur et la périphérie interne de la pièce porteuse comportant une partie en forme de U entourant partiellement le rotor portant la cible magnétique. Les capteurs sont implantés en vis à vis de cette cible de manière similaire à ce qui est décrit dans les figures 23 à 25 du document FR 2 802 592 déposé le 20/12/2000, la cible magnétique remplaçant la roue codeuse. La machine est alors du type synchrone.

La cible comporte avantageusement un nombre de paires de pôles magnétiques Nord-Sud identiques à celui du rotor 4. Le porte-cible est de nature amagnétique ou en variante amagnétique. La cible peut comporter des ferrites et/ou des terres rares. En variante la cible est magnétisée à l'aide de bobinages ou comporte des secteurs inertes fluxés par le champ magnétique rotorique.

Les moyens de suivi de la position angulaire du rotor sont donc du type magnétique et comportent des capteurs du type linéaire de manière précitée. Les capteurs sont dans un mode de réalisation des capteurs à effet Hall du type linéaire, en variante des capteurs magnétorésistifs.

Dans tous les cas les capteurs 52 envoient des informations, ici sous la forme de signaux, au module électronique de l'unité de commande et de contrôle du pont. Ici trois capteurs sont prévus à raison d'un capteur par phase la machine étant du type triphasé, les signaux des capteurs étant, de manière connue, déphasés d'un angle de 120° électrique pour alimentation séquentielle des phases du stator 8 permettant de créer un champ électromagnétique tournant.

On voit à la figure 4 le signal sinusoïdal délivré par l'un des capteurs du type linéaire après lecture de la cible magnétique.

Dans cette courbe l'ordonnée V représente une tension et l'abscisse t un temps.

Le signal est globalement sinusoïdal du fait de la présence de la cible magnétique. Avec ce type de signal on peut connaître la position instantanée du rotor 4 de la machine.

On voit dans cette figure 4 la présence d'un décalage de tension (V offset). Ce décalage est du à la présence du rotor 4, plus précisément à la magnétisation du rotor due à la présence d'au moins un bobinage d'excitation que comporte le rotor, qui influe sur le signal délivré par le capteur après lecture de la cible magnétique.

Des bruits et des saturations des capteurs se produisent également.

Tout ceci affecte le signal délivré par le capteur en sorte que celui-ci n'est pas centré sur le zéro de la figure 4.

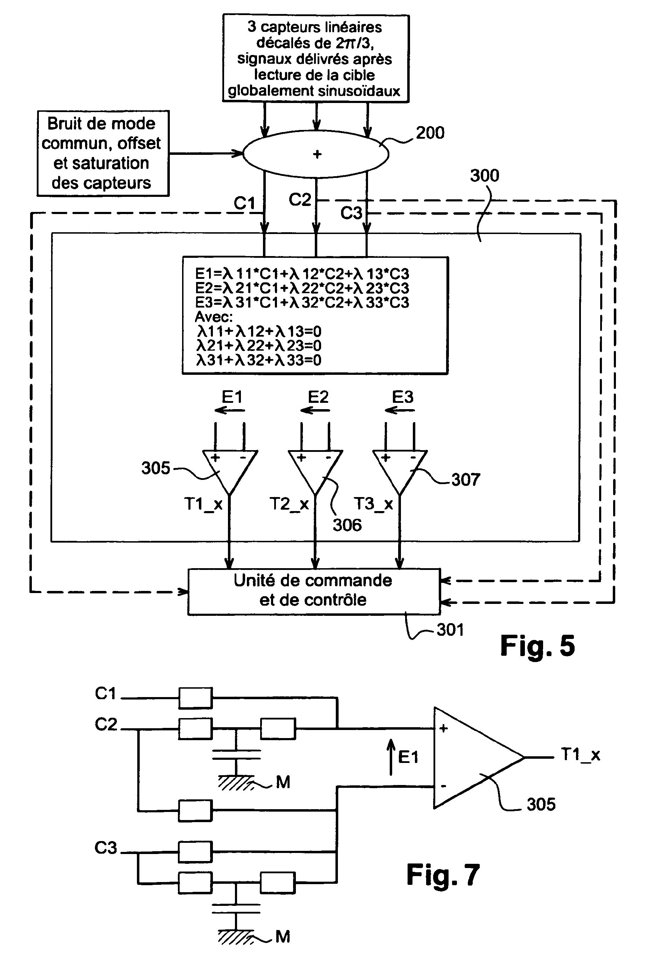

A la figure 5 on a schématisé cela par le bloc 200 indiquant que chaque signal d'un capteur est augmenté notamment par « l'offset » de la figure 4.

L'invention tire partie de ces capteurs du type linéaire pour augmenter le couple délivré par la machine lorsque celle-ci fonctionne en mode moteur électrique.

Ainsi suivant l'invention on effectue dans une unité 300 de traitement une sommation des signaux délivrés par les capteurs en affectant à ceux-ci un coefficient pour créer des signaux déphasés en nombre égal au nombre de capteurs. Pour chaque signal déphasé la somme des coefficients est nulle.

Dans le mode de réalisation décrit la machine électrique tournante est du type triphasé en sorte qu'il est prévu trois capteurs à raison d'un capteur par phase.

L'unité 300 reçoit ainsi les signaux C1, C2 et C3 délivrés par les trois capteurs 52 et affectés par les bruits, les offset et les saturations des capteurs. Les signaux C1, C2 et C3 sont donc délivrés par le bloc 200.

La figure 5 illustre l'invention, les signaux de sortie T1_X, T2_X et T3_X correspondant aux signaux des nouveaux capteurs de la figure 2.

L'augmentation du couple est visible à la figure 1. Plus précisément les courbes C et D de l'art antérieur sont raccordées par la courbe G obtenue grâce à l'invention et on a représenté par une zone hachurée l'augmentation de couple.

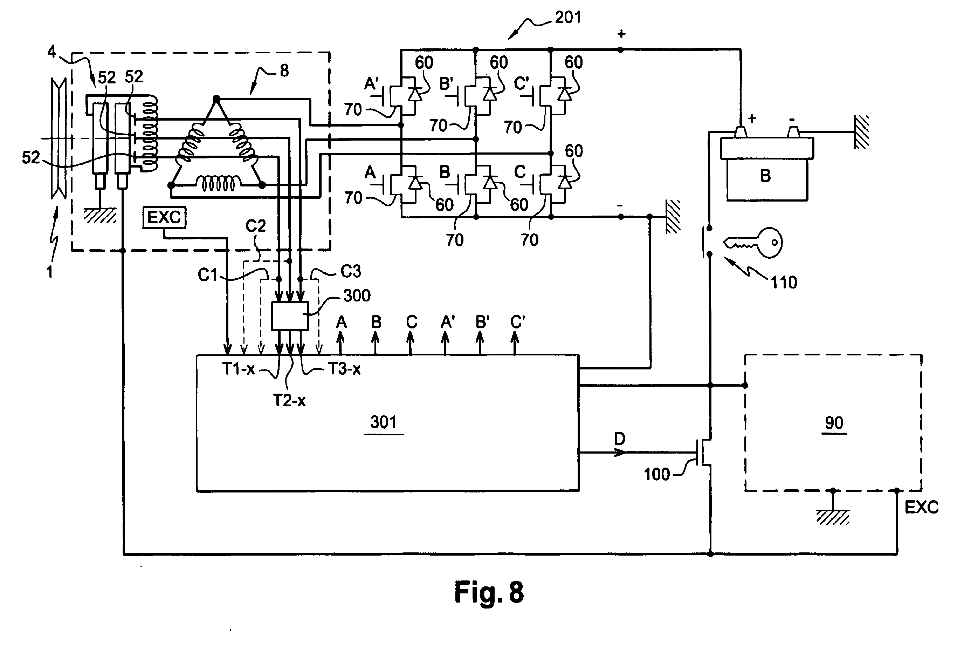

A la figure 8 on a représenté, comme dans les documents FR A 2 745 444 et FR A 2 7445 444 auxquels on se reportera pour plus de précisions, un schéma de la machine électrique réversible selon l'invention incluant l'unité de traitement 300.

Ainsi on voit en 52 les capteurs du type linéaire et en 300 l'unité de traitement précitée avec ses signaux d'entrée C1 à C3 et ses signaux de sortie T1_x à T3_x reliés électriquement au module électronique de commande et de contrôle 301 de l'unité de commande et de contrôle 301.

Dans cette figure les références 1, 4, 8 désignent respectivement la poulie 1 de la machine, le rotor avec son bobinage d'excitation schématisé et le stator schématisé par ses enroulements ou bobinages ici en triangle et à raison d'un enroulement par phase.

La référence 201 désigne le pont de redressement et de commande associé à la machine et relié aux sorties des phases du stator de la machine, c'est-à-dire aux enroulements du stator.

Ce pont appartient à l'unité de commande et de contrôle et constitue un étage de puissance de celle-ci. Ce pont 201 est piloté par le module électronique de commande et de contrôle 301 du pont constituant un étage de plus faible puissance que celle du pont. L'unité 301 comporte par exemple des drivers (pilotes) dotés de circuits logiques pour piloter le pont ainsi qu'un calculateur, tel qu'un microcontrôleur.

Ce pont 201 est monté entre la masse et la borne positive de la batterie B du véhicule. Il comporte ici des transistors 70 du type MOSFET intégrant par construction une diode 60 entre leur drain et leur source.

En mode moteur électrique les diodes fonctionnent en diode de roue libre, le pont étant alors un onduleur avec des bras, et en mode générateur électrique elles fonctionnent en pont redresseur comme dans un alternateur classique. Les transistors 70 jouent donc, de manière connue, à la fois le rôle d'interrupteurs et de diode de roue libre.

Le module électronique de commande et de contrôle 301 du pont 201 délivre en mode moteur électrique (mode onduleur) des signaux A, B, C sur les grilles des transistors 70 reliés à la masse et des signaux A', B', C' sur les grilles des transistors 70 reliés à la borne positive de la batterie B du véhicule. Pour ce faire le module 301 présente des drivers associés à chacun des signaux T1_X, T2_X et T3_X afin de générer les signaux A à C'.

La référence 90 représente le régulateur de tension et la référence 110 la clef de contact et son interrupteur associé. Le module 301 commande également un transistor 100 du type MOSFET relié au régulateur 90 pour court-circuiter celui-ci en mode électrique.

Grâce à l'invention on peut réaliser des décalages de capteur continûment variables sur toute la plage de vitesse de manière à avoir un couple optimal sur cette plage. Pour cela il suffit d'avoir une consigne de phase tenant compte de l'amplitude des signaux capteurs C1, C2, C3 (voir figure 4), et de la comparer aux mêmes signaux capteurs C1, C2, C3, plus précisément à la valeur absolue de la composante alternative des signaux C1, C2, C3 qui ne tient pas compte du décalage du à la présence du rotor bobiné.

Un microcontrôleur réalise cela dans le mode de réalisation de la figure 6.

Ainsi dans cette figure 6 l'unité de traitement comporte un microcontrôleur 302 relié par des liaisons électriques 303 à un convertisseur numérique analogique 304 connecté lui-même aux comparateurs 305 à 306 délivrant les signaux T1_x, T2_x et T3_x associés aux drivers du module 301 générant les signaux A à C'. Le convertisseur 304 reçoit les signaux C1 à C3.

Un circuit analogique linéaire (condensateurs et résistances) permet aussi de réaliser un décalage d'au moins un capteur, de préférence des capteurs en fonction de la vitesse de rotation du rotor.

La figure 7 montre en partie un tel circuit. Dans cette figure les résistances sont représentées par des rectangles et les condensateurs de manière conventionnelle, M étant la masse. Pour plus de précisions notamment en ce qui concerne les liaisons électriques en particulier avec les entrées + et - du comparateur, ici le comparateur 305, on se reportera à cette figure 7, sachant que le motif est répétitif pour les autres comparateurs 306 et 307.

Avantageusement on réalise une combinaison linéaire des capteurs de sorte que la somme des coefficients soit nulle (le bruit de mode commun et l'offset sont alors éliminés)

Les signaux C1, C2, C3 sont approximativement sinusoïdaux et ont comme valeur exprimée en nombre imaginaire :

$$c_1 = e^{j\omega t}$$

$$c_2 = e^{j(\omega t + 2\pi/3)}$$

$$c_3 = e^{j(\omega t - 2\pi/3)}$$

On calcule les coefficients $\lambda$ pour ajouter un déphasage $\theta$ en sorte que

$$e^{j(\omega t + \theta)} = \sum_{i=1}^{3} \lambda_i . c_i$$

avec

$$\sum_{i=1}^{3} \lambda_i = 0$$

La figure 5 mentionne ces coefficients et donc la valeur E1 à E3 correspondant à des différences de potentiel entre les entrées positive (non inverseuses) et négative (inverseuses) des comparateurs 305 à 307.

Plus précisément pour simplifier le montage pour les coefficients $\lambda$ négatifs on utilise les entrées inverseuses (-) des comparateurs pour limiter le nombre de composants. On ne fait pas de comparaison par rapport à 0. Pour les coefficients $\lambda$ positifs on utilise les entrées non inverseuses (+) des comparateurs.

En variante on réalise des déphasages de manière discrète.

Ainsi dans un mode de réalisation on réalise un déphasage de 30° des signaux des capteurs de manière simple pour une vitesses de rotation déterminée de la machine inférieure à celle de l'art antérieur comme illustrée à la figure 1 (vitesses de l'ordre de 800 tours par minute non possible avec des capteurs de type tout ou rien).

Pour les coefficients λ négatifs on utilise de manière précitée les entrées inverseuses (-) des comparateurs pour limiter le nombre de composants.

Dans ce cas la valeur des coefficients associés aux signaux E1, E2 et E3 sont respectivement 1 -1 0, 0 1 -1 et -1 0 1. Autrement dit on compare les signaux des capteurs (ceux venant du bloc 200) deux à deux dans les comparateurs 305 à 307. E1 est alors égal à C1-C2, E2 à C2 -C3 et E3 à -C1 + C3.

Pour éviter les problèmes liés notamment aux offset on peut faire la somme de tous les signaux, ensuite la diviser par trois et comparer le résultat avec les signaux instantanés.

Ainsi comme dans le document WO 02/060711 précité, dans une première étape on utilise directement les signaux C1 à C3, puis dans une deuxième étape on utilise les signaux déphasés de 30° de manière précitée et enfin dans une troisième étape (déphasage de 60°) on effectue une permutation et une inversion des signaux comme dans le document WO 02/060711. C'est pour cette raison que dans les figures 5 et 8 on a représenté en pointillés des liaisons entre les signaux et le module 301, qui est ainsi adapté à recevoir six informations. Dans la première étape les signaux C1 à C3 sont envoyés directement dans le module 301. Dans la deuxième étape le module 301 reçoit les informations T1_x à T3_x.

Bien entendu on peut réaliser d'autres opérations de permutation et d'inversion. Par exemple dans une quatrième étape supplémentaire on réalise un déphasage de 90°.

Les vitesses de rotation de la machine pour lesquelles on effectue ces différentes phases sont prédéterminées en fonction de la machine et répertoriée dans le module 301.

Bien entendu en ce qui concerne le circuit de surexcitation et de démagnétisation rapide on peut utiliser toutes les solutions décrites dans le document WO 02/060711.

Ainsi dans un mode de réalisation, lorsque la machine fonctionne en mode démarreur, notamment pour démarrer le véhicule automobile, la surexcitation (tension et/ou courant délivré par le circuit de surexcitation) est plus grande que la surexcitation en mode alternateur afin de maximiser le couple (et donc la puissance) de démarrage de l'alternateur-démarreur. L'augmentation du taux d'excitation est réalisée par exemple par une surtension aux bornes du bobinage d'excitation du rotor ou par un survolteur électronique.

Avec l'invention il est possible de faire du freinage récupératif.

Ainsi avantageusement ladite machine électrique étant connectée à un réseau de bord du véhicule, en mode alternateur, on active le mode freinage du véhicule avec récupération d'énergie lors des phases de freinage du véhicule automobile.

Lors des phases de freinage, on augmente le taux d'excitation afin de prélever sur le moteur un couple supérieur. L'énergie récupérée est stockée dans un dispositif à stockage d'énergie.

Le dispositif à stockage d'énergie est par exemple une ultracapacité.

L'énergie stockée dans le dispositif à stockage d'énergie est restituée au réseau de bord pour un nouveau démarrage de l'alternateur-démarreur ou pour l'alimentation des consommateurs connectés.

En variante l'énergie stockée dans le dispositif à stockage d'énergie est restituée à l'alternateur-démarreur fonctionnant en mode moteur électrique ou en mode stop.

En résumé dans le mode de réalisation de la figure 5 selon l'invention on obtient la formule

$$E1=\lambda 11 \cdot C1+\lambda 12 \cdot C2+\lambda 13 \cdot C3$$
$$E2=\lambda 21 \cdot C1+\lambda 22 \cdot C2+\lambda 23 \cdot C3$$
$$E3=\lambda 31 \cdot C1+\lambda 32 \cdot C2+\lambda 33 \cdot C3$$
$$\text{Avec:}$$
$$\lambda 11+\lambda 12+\lambda 13=0$$
$$\lambda 21+\lambda 22+\lambda 23=0$$
$$\lambda 31+\lambda 32+\lambda 33=0$$

Bien entendu en variante les moyens de suivi de la rotation du rotor sont du type optique.

En variante la machine comporte plus de trois phases en sorte qu'il est prévu plus de trois capteurs. Par exemple pour une machine à cinq phases, par exemple connectées en étoile, il est prévu cinq capteurs. En variante pour une machine du type hexaphasé il est prévu six capteurs.

Bien entendu toutes les combinaisons sont possibles.

**Revendications**

1. Procédé de commande d'une machine électrique tournante polyphasée et réversible, dite alternateur-démarreur, pour véhicule automobile à moteur thermique pouvant fonctionner soit en générateur électrique - mode alternateur - soit en moteur électrique, ladite machine comportant un rotor (4), un stator (8) polyphasé portant plusieurs enroulements, une unité de commande et de contrôle comportant un pont de redressement et de commande (201) associé à la machine électrique tournante et relié aux enroulements du stator de cette machine et des moyens pour le suivi de la position angulaire du rotor, ces moyens étant dotés d'une cible et de capteurs (52) détectant le passage de la cible, des moyens pour déphaser des signaux délivrés par les capteurs et des moyens pour envoyer les signaux déphasés à l'unité de commande et de contrôle afin d'obtenir une réponse en couple améliorée de ladite machine lorsque celle-ci fonctionne en moteur électrique, **caractérisé en ce que**, partant de capteurs du type linéaire délivrant des signaux de type sinusoïdal, après lecture de la cible, des décalages de phase continûment variables sont introduits dans lesdits signaux déphasés, lesdits décalages de phase étant fonction de la vitesse de rotation du rotor et lesdits décalages étant obtenus par une sommation dans une unité de traitement (300) des signaux délivrés par les capteurs en affectant à chacun de ceux-ci un coefficient variable octroyant un poids respectif au signal correspondant avant sommation.

**2.** Procédé selon la revendication 1, **caractérisé en ce que** pour chaque signal déphasé la somme des coefficients est nulle.

**3.** Procédé selon la revendication 1 ou 2, **caractérisé en ce que** les moyens pour le suivi de la position angulaire du rotor sont du type magnétique.

**4.** Procédé selon la revendication 1 ou 2, **caractérisé en ce que** l'unité de traitement (300) comporte des comparateurs avec des entrées inverseuses (-) et non inverseuses (+) et **en ce que** pour les coefficients (λ) négatifs on utilise les entrées inverseuses (-) des comparateurs, tandis que pour les coefficients (λ) positifs on utilise les entrées non inverseuses (+) des comparateurs.

**5.** Procédé selon la revendication 4, **caractérisé en ce que** l'unité de traitement comporte un microcontrôleur (302) relié par des liaisons électriques (303) à un convertisseur numérique analogique (304) connecté lui-même aux comparateurs (305 à 306).

**6.** Procédé selon la revendication 4, **caractérisé en ce que** l'on compare les signaux des capteurs deux à deux dans les comparateurs.

**7.** Procédé selon la revendication 6, **caractérisé en ce que** la machine comporte trois phases et **en ce qu'**il est prévu trois capteurs à raison d'un capteur par phase.

**Claims**

**1.** Method for controlling a polyphase, reversible rotating electric machine, called an alternator-starter, for a motor vehicle with a thermal engine that is able to operate either as an electric generator - alternator mode - or as an electric motor, the said machine comprising a rotor (4), a polyphase stator (8) supporting several windings, a command and control unit comprising a rectifying and controlling bridge (201) associated with the rotating electric machine and connected to the windings of the stator of this machine and means for monitoring the angular position of the rotor, these means being furnished with a target and sensors (52) detecting the passage of the target, means for phase-shifting signals delivered by the sensors and means for sending the phase-shifted signals to the command and control unit in order to obtain a response in improved torque of the said machine when the latter operates as an electric motor, **characterized in that**, beginning with sensors of the linear type delivering signals of the sinewave type, after reading of the target, continuously variable phase shifts are inserted into the said phase-shifted signals, the said phase shifts being a function of the rotation speed of the rotor and of the said phase shifts being obtained by a totalization in a processing unit (300) of the signals delivered by the sensors by assigning to each of the latter a variable coefficient granting a respective weight to the corresponding signal before totalization.

**2.** Method according to Claim 1, **characterized in that**, for each phase-shifted signal, the total of the coefficients is zero.

**3.** Method according to Claim 1 or 2, **characterized in that** the means for monitoring the angular position of the rotor are of the magnetic type.

**4.** Method according to Claim 1 or 2, **characterized in that** the processing unit (300) comprises comparators with inverting inputs (-) and non-inverting inputs (+) and **in that**, for the negative coefficients (λ), the inverting inputs (-) of the comparators are used, while, for the positive coefficients (λ), the non-inverting inputs (+) of the comparators are used.

**5.** Method according to Claim 4, **characterized in that** the processing unit comprises a microcontroller (302) connected by electric links (303) to a digital-analogue converter (304) itself connected to the comparators (305 to 306).

**6.** Method according to Claim 4, **characterized in that** the signals of the sensors are compared in twos in the comparators.

**7.** Method according to Claim 6, **characterized in that** the machine comprises three phases and **in that** three sensors are provided at the rate of one sensor per phase.

**Patentansprüche**

1. Verfahren zur Steuerung einer reversiblen, rotierenden elektrischen Mehrphasenmaschine, Anlassgenerator genannt, für ein Kraftfahrzeug mit Verbrennungsmotor, das entweder als ein elektrischer Generator - Generatormodus - oder als Elektromotor funktionieren kann, wobei die Maschine einen Rotor (4) einen Mehrphasenstator (8), der mehrere Wicklungen trägt, eine Steuer- und Kontrolleinheit, die eine Gleichrichter- und Steuerbrücke (201) umfasst, die mit der rotierenden elektrischen Maschine assoziiert und den Wicklungen des Stators dieser Maschine verbunden ist, und Mittel zur Überwachung der Winkelposition des Rotors umfasst, wobei diese Mittel mit einem Ziel und Sensoren (52) versehen sind, die den Durchgang des Ziels erfassen, mit Mitteln, um von den Sensoren gelieferte Signale phasenzuversetzen, und Mitteln, um die phasenversetzten Signale an die Steuer- und Kontrolleinheit zu senden, um eine verbesserte Momentantwort der Maschine zu erlangen, wenn diese als Elektromotor funktioniert, **dadurch gekennzeichnet, dass** auf Basis von Sensoren linearen Typs, die Signale vom Sinustyp liefern, nach dem Ablesen des Ziels kontinuierlich variable Phasenversetzungen in die phasenversetzten Signale eingeleitet werden, wobei die Phasenversetzungen von der Rotationsgeschwindigkeit des Rotors abhängen und die Versetzungen durch eine Summierung in einer Bearbeitungseinheit (300) der von den Sensoren gelieferten Signale erhalten werden, wobei jedem derselben ein variabler Koeffizient zugeordnet wird, der dem entsprechenden Signal vor der Summierung ein jeweiliges Gewicht verleiht.

2. Verfahren nach Anspruch 1, **dadurch gekennzeichnet, dass** für jedes phasenversetzte Signal die Summe der Koeffizienten gleich null ist.

3. Verfahren nach Anspruch 1 oder 2, **dadurch gekennzeichnet, dass** die Mittel zur Überwachung der Winkelposition des Rotors magnetischen Typs sind.

4. Verfahren nach Anspruch 1 oder 2, **dadurch gekennzeichnet, dass** die Bearbeitungseinheit (300) Komparatoren mit umkehrenden (-) und nicht umkehrenden Eingängen (+) umfasst, und dass für die negativen Koeffizienten ($\lambda$) die umkehrenden Eingänge (-) der Komparatoren verwendet werden, während für die positiven Koeffizienten ($\lambda$) die nicht umkehrenden Eingänge (+) der Komparatoren verwendet werden.

5. Verfahren nach Anspruch 4, **dadurch gekennzeichnet, dass** die Bearbeitungseinheit einen Mikrokontroller (302) umfasst, der über elektrische Verbindungen (303) mit einem Analog-Digital-Umsetzer (304) verbunden ist, der selbst an die Komparatoren (305 bis 306) angeschlossen ist.

6. Verfahren nach Anspruch 4, **dadurch gekennzeichnet, dass** die Signale der Sensoren zwei und zwei in den Komparatoren verglichen werden.

7. Verfahren nach Anspruch 6, **dadurch gekennzeichnet, dass** die Maschine drei Phasen umfasst, und dass drei Sensoren, nämlich ein Sensor pro Phase, vorgesehen sind.

**Fig. 1**

Légende:
- ■ Puissance avec dispositif W
- – – Puissance sans dispositif W
- ◆ Couple avec dispositif N.m
- – – Couple sans dispositif N.m

Capteur phase 1
$(-)C_1$
$C_1$

Capteur phase 2
$(-)C_2$
$C_2$

Capteur phase 3
$(-)C_3$
$C_3$

$(-)n$

Vitesse n atteinte et fonction moteur activée
n

Nouveau capteur phase 1
Nouveau capteur phase 2
Nouveau capteur phase 3

$c'1 = c1.(-)n + (-)c3.n$
$c'3 = c3.(-)n + (-)c2.n$
$c'2 = c2.(-)n + (-)c1.n$

**Fig. 2**

EP 1 627 462 B1

**Fig. 3**

Vcapteur

Voffset

0                    t

**Fig. 4**

C1   C2   C3

302   303   304   305

Micro-contrôleur

Convertisseur numérique analogique

E1      T1_x

E2      T2_x

E3      T3_x

303

306

307

**Fig. 6**

13

3 capteurs linéaires
décalés de 2π/3,
signaux délivrés après
lecture de la cible
globalement sinusoïdaux

Bruit de mode
commun, offset
et saturation
des capteurs

+ ~ 200

C1    C2    C3    300

E1=λ11*C1+λ12*C2+λ13*C3
E2=λ21*C1+λ22*C2+λ23*C3
E3=λ31*C1+λ32*C2+λ33*C3
Avec:
λ11+λ12+λ13=0
λ21+λ22+λ23=0
λ31+λ32+λ33=0

E1         E2         E3

305          306          307

T1_x      T2_x      T3_x

Unité de commande
et de contrôle

301

**Fig. 5**

C1
C2

E1

T1_x

M

305

C3

M

**Fig. 7**

**Fig. 8**

EP 1 627 462 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0260176 A
- US 4803376 A
- FR 2745444 A
- FR 2745445 A
- US 6002219 A
- WO 0169762 A
- US 20020158523 A
- EP 0715979 A
- WO 0145250 A
- US 5182500 A
- WO 02060711 A
- US 20030038482 A
- EP 0515259 A
- US 5270605 A

- FR 2793085 A
- US 6486585 A
- FR 2737063 A
- WO 9206527 A
- WO 0250976 A
- US 20030011268 A
- US 5097167 A
- FR 0116088
- FR 2835978 A
- WO 0193406 A
- FR 2782356 A
- WO 02054566 A
- FR 2807231
- FR 2802592
- FR 27445444 A